Europäisches Patentamt

**European Patent Office**

**Office européen des brevets**

(19)

(11) Publication number: **0 065 891**

**A1**

(12)

# EUROPEAN PATENT APPLICATION

(21) Application number: **82400746.2**

(22) Date of filing: **27.04.82**

(51) Int. Cl.³: **B 60 T 11/22**

(30) Priority: **14.05.81 US 263549**

(43) Date of publication of application:
**01.12.82 Bulletin 82/48**

(84) Designated Contracting States:
**DE FR GB IT**

(71) Applicant: **THE BENDIX CORPORATION**
**Executive Offices Bendix Center**
**Southfield Michigan 48037(US)**

(72) Inventor: **Gaiser, Robert Frank**
**5843 Ponderosa Drive**
**Stevensville Michigan 49127(US)**

(72) Inventor: **Bach, Lloyd Gene**
**61500 Greentree Drive**
**South Bend Indiana 46614(US)**

(74) Representative: **Huchet, André et al,**
**Service Brevets Bendix 44, rue François 1er**
**F-75008 Paris(FR)**

(54) Master cylinder.

(57) A master cylinder comprising a housing (72) defining a longitudinally extending bore (14), at least one piston (16) slidably received within said bore to generate fluid pressure therein, a fluid reservoir carried on the housing, and a fluid passage extending rearwardly from said fluid reservoir for communicating the latter with the bore for replenishment purposes.

According to the invention, the fluid passage includes at least one groove (76) formed on the periphery of an end portion (74) of the housing projecting rearwardly from the reservoir and surrounded by a sleeve (82) carried on said housing end portion.

For use in brake systems for automotive vehicles.

Fig. 2

EP 0 065 891 A1

## Master cylinder

This invention relates to a master cylinder which is operable during braking to generate fluid pressure and communicate the same to a braking system of a vehicle.

A master cylinder is usually mounted in the engine compartment of a vehicle to extend forwardly either from a fire wall or from a booster housing. In both situations, and, in particular where the booster housing mounts the master cylinder, it is desirable to recess the master cylinder within the firewall or the booster housing to conserve space within the engine compartment. When this is done, the primary piston within the master cylinder housing is spaced axially from the reservoir so that an angled compensation passage is required to communicate fluid to the bore at a location adjacent the primary piston. Such an angled passage is lengthly and generates manufacturing problems relative to drill bit wander and cycle time.

It is, therefore, an essential object of this invention to provide such a master cylinder with a compensation passage which is easier and less expensive to manufacture than in prior art systems  as described above.

This object is achieved, according to the invention, and in a master cylinder of the kind comprising a housing which defines a longitudinally extending bore, at least one piston slidably received within said bore to generate fluid pressure therein, a fluid reservoir carried on the housing, and a passage extending rearwardly from said fluid reservoir for communicating the latter with the bore for replenishment purposes, thanks to the fact that said passage is formed substantially between an end portion of the housing projecting rearwardly with respect to the fluid reservoir and a sleeve surrounding said housing end portion.

In a preferred embodiment, the passage includes at least one groove which is formed on the periphery of said housing end portion  and advantageously comprises a longitudinally extending major portion and a transversely extending minor portion connecting said major portion to the inner of the housing bore at the open end of the housing which receives the piston.

It is an advantage of the present invention that a simple economical sleeve is provided in combination with a master cylinder housing to communicate the reservoir with a compensation port which is axially disposed from the reservoir.

This and other advantageous features of the invention will become readily apparent from reading the following description of a preferred embodiment, given by way of example only, and with reference to the accompanying drawings, in which:

Figure 1 is a side view in cross-section of a master cylinder constructed in accordance with the state of the art;

Figure 2 is a view similar to Figure 1 showing the present invention; and

Figure 3 is a cross section taken along line 3-3 of Figure 2.

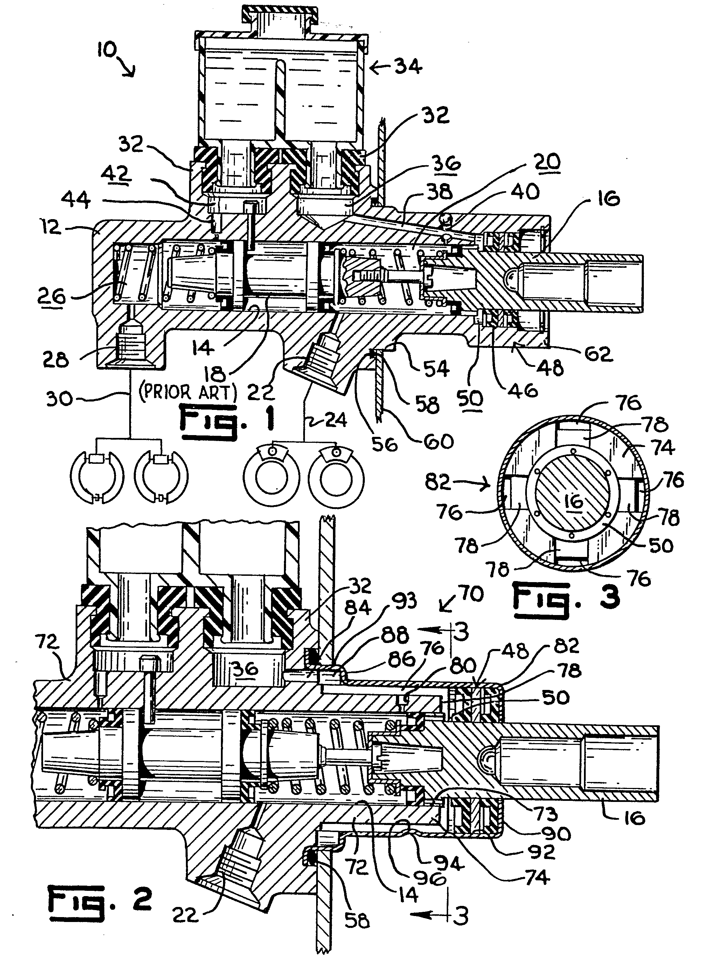

The master cylinder assembly shown in Figure 1 is generally referred to as reference numeral 10. The master cylinder 10 includes a housing 12 defining an axially extending bore 14 for movably receiving a first piston 16 and a second piston 18. The first piston 16 cooperates with the wall of the housing bore 14 and the second piston 18 to define a first pressure chamber 20 communicating via outlet port 22 with a first brake circuit 24. The second piston 18 cooperates with the wall of the housing bore 14 to define a second chamber 26 communicating via outlet port 28 with a second brake circuit 30. The master cylinder housing 12 forms a transversely extending boss 32 for mounting a reservoir 34 on the housing 12. A cavity 36 within the boss 32 communicates the reservoir 34 with the first pressure chamber 20 via an angular passage 38. The angular passage 38 is intersected by a first compensation port 40 to directly lead to the first pressure chamber 20. Another cavity 42 within boss 32 communicates the reservoir 34 with the second pressure chamber 26 via a second compensation port 44. The angular passage 38 extends from a recess 46 formed by bore 14 to the cavity 36 and the recess 46 receives a seal assembly 48 engaging the first piston 16. Consequently, the angular passage terminates in a replenishing chamber 50 formed by the piston 16 to communicate fluid thereto when the first piston 16 is moving within the bore.

In order to mount the master cylinder within a vehicle, the housing 12 is provided with a shoulder 54 adjacenet the one end of the boss 32 and also adjacent the outlet port 22. A recess 56 adjoining the shoulder receives a seal 58 for engaging the mounting plate 60. The mounting plate 60 can be either the end of a booster assembly or the firewall of an engine compartment. With the shoulder 54 adjacent the boss 32, the one end 62 of the housing 12 and the first piston 16 are substantially disposed to the right side of the mounting plate 60 in isolation from the engine compartment.

Turning to the invention shown in Figure 2, wherein like reference numerals identify common parts in the master cylinders of Figures 1 and 2, the master cylinder 70 includes a housing 72 with an end 74 defining an opening 73 for receiving the first piston 16. The end 74 of the housing 72 is formed with a plurality of axially extending grooves 76 on the outer periphery of the housing. The grooves 76 extend axially from the boss 32 to the end of the housing 72. Moreover, the end of the housing is provided with radially extending grooves 78 in communication with the grooves 76 and in communication with the replenishing chamber 50. At least one compensation port 80 communicates one of the grooves 76 with the bore 14. In accordance with the invention a sleeve 82 is coupled to the end 74 of the housing 72 to enclose the grooves 76. The housing recess 56 receives one end of the sleeve 82 with the seal 58 sealingly engaging the sleeve 82, the housing 72 and the mounting plate 60. In order to communicate the grooves 76 with the reservoir 34, the boss 32 is provided with an opening 84 and the sleeve is stepped at 86 to form an intermediate chamber 88. Consequently, the cavity 36 communicates with the chamber 88 via opening 84 and the chamber 88 extends circumferentially around the housing 72 to communicate with all of the grooves 76. Fluid within the cavity 36 communicates with the first chamber 20 via opening 84, chamber 88, grooves 76, and port 80. Also, fluid within cavity 36 communicates with the replenishing chamber 50 via opening 84, chamber 88, grooves 76 and grooves 78.

The sleeve terminates in a radially inwardly extending flange 90 which opposes the grooves 78 on the end 74 of the housing 72. The flange 90 cooperates with the end 74 of the housing to define a recess 92 for fixedly positioning the seal assembly 48. The seal assembly 48 sealingly engages the first piston 16 and the inner wall of the sleeve 82.

The step 86 on the sleeve provides a cylindrical surface 93 which is in alignment with an opening in the mounting plate 60 to position the master cylinder with its sleeve relative to the mounting plate.

In order to retain the sleeve 82 on the end 74 of the housing 72, the sleeve is provided with inwardly extending flexible tabs 94 and the walls of the grooves 76 are provided with recesses 96 so that when the sleeve is positioned in the recess 56, the tabs deflect into the recesses 96 to releasably retain the sleeve 82 on the housing apart from the mounting plate 60.

There are many possible variations to the invention as illustrated in Figure 2. For example, it is possible to provide the grooves 76 solely within the sleeve 82 to communicate fluid from the reservoir 34 to the bore 14.

## CLAIMS

1. A master cylinder comprising a housing (72) defining a longitudinally extending bore (14), at least one piston (16) slidably received within said bore to generate fluid pressure therein, a fluid reservoir (34) carried on the housing, and a passage extending rearwardly from said fluid reservoir for communicating the latter with the bore for replenishment purposes, characterized in that said passage (84,88,76,80) is formed substantially between an end portion (74) of the housing (72) projecting rearwardly with respect to the fluid reservoir (34) and a sleeve (82) surrounding said housing end portion (74).

2. A master cylinder according to Claim 1, characterized in that the sleeve (82) further surrounds and retains in a fixed location with respect to the housing end portion (74) a seal assembly (48) which cooperates with the piston (16) to seal said passage (84,88,76,80) from the surrounding environment.

3. A master cylinder according to Claim 1 or 2, characterized in that the passage includes at least one groove (76,78) which is formed on the periphery of said housing end portion (74).

4. A master cylinder according to Claim 3, characterized in that the groove includes a longitudinally extending major portion (76) and a transversely extending minor portion (78) connecting said major portion to the inner of the housing bore (14) at the open end of the housing which receives the piston (16).

5. A master cylinder according to any of Claims 1 to 4, characterized in that the housing end portion (74) further includes abutment means (96) and the sleeve (82) includes locking means (94) cooperating with said abutment means (96) to retain said sleeve (82) in cooperation with said housing end portion (74).

6. A master cylinder according to any of Claims 3 to 5, characterized in that the housing further comprises a transversely extending boss (32) to connect the fluid reservoir (34) to said housing (72), and said passage further includes an aperture (84) on said boss communicating said fluid reservoir (34) with said groove (76,78).

7. A master cylinder according to any of Claims 1 to 6, characterized in that the sleeve (82) defines a surface (93) engageable with means (60) for mounting the master cylinder within a vehicle, said surface leading to a recess (56) on the housing (72) and said sleeve (82) extending into said recess (56) to sealingly engage said housing (72).

8. A master cylinder according to any of Claims 3 to 7, characterized in that the housing (72) defines a plurality of substantially longitudinally extending grooves (76) and the sleeve (82) is provided with a step (86) to communicate said grooves with each other .

0065891

1 / 1

**Fig. 1**
(PRIOR ART)

**Fig. 2**

**Fig. 3**

0065891

European Patent Office

**EUROPEAN SEARCH REPORT**

Application number

EP 82 40 0746

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| P,E | EP-A-0 046 339 (LUCAS INDUSTRIES) <br> * Page 4, line 17 - page 6, line 8; page 7, line 17 - page 8, line 29; figures 1,3 * | 1,2,4, 6,7 | B 60 T 11/22 |
| | --- | | |
| A | GB-A-2 052 656 (LUCAS INDUSTRIES) <br> * Whole document; figures 1,2 * | 1,2,4 | |
| | --- | | |
| A | GB-A-1 481 612 (AUTOMOTIVE PRODUCTS) | | |
| | --- | | |
| A | FR-A- 881 879 (ARGUS MOTOREN) | | |
| | --- | | |
| A | GB-A-1 065 599 (AUTOMOTIVE PRODUCTS) | | **TECHNICAL FIELDS SEARCHED (Int. Cl. ³)** |
| | ----- | | B 60 F 11/00 |

The present search report has been drawn up for all claims

| Place of search | Date of completion of the search | Examiner |
|---|---|---|
| THE HAGUE | 19-08-1982 | BRAEMS C.G.T. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82